# EUROPEAN PATENT APPLICATION

(11) **EP 3 940 607 A1**
(43) Date of publication of application: **19.01.2022**
(21) Application number: 20185683.8
(22) Date of filing: 14.07.2020
(51) Int. Cl.: G06N 3/08, G06N 3/10, G06N 3/04

(54) **A NEURAL NETWORK MODEL, A METHOD AND MODELLING ENVIRONMENT FOR CONFIGURING NEURAL NETWORKS**

(71) Applicant: Siemens Aktiengesellschaft, 80333 München (DE)
(72) Inventor: Kupriyanov, Olexiy, 90765 Fürth (DE); Bonner, Maria, 90491 Nürnberg (DE)

(57) **Abstract**

A neural network model, method and modelling environment for configuring neural networks is disclosed. The method of configuring at least one neural network (120) used in an industrial environment, wherein the industrial environment (112, 114, 116) comprises at least one industrial system with one or more hardware and software components, the method comprises receiving the neural network, wherein the neural network (120) is trained based on at least one trained dataset associated with a system architecture of the industrial system; determining modified-parameters of the neural network (120) based on the training; defining a changeability index for the trained neural network (172) based on comparison of the modified-parameters with predefined-parameters of the neural network (120); and configuring the neural network (120, 172) based on the changeability index.

## Description

The present invention relates to configuring neural networks, particularly neural networks that are employed in industrial applications and are associable with an industrial environment. Further, the present invention relates to collaborative configuring of the neural networks.

Machine learning methods/components such as neural networks or deep neural networks are widely used for industrial applications and in industrial systems. For example, in image classification for autonomous driving or anomaly detection in a process automation plant. Unfortunately, the accuracy of the machine learning methods may be unclear and thereby making them not be suitable for direct use. This challenge may be particularly observed in safe-critical industrial environments. The accuracy may be hidden due to the black box nature of the machine learning methods. Accordingly, verification and analysis of machine learning methods is hard to accomplish.

On the other hand, design complexity of the industrial systems has resulted in collaborative engineering. Collaborative engineering processes and structured well-defined relationships between Original Equipment Manufacturers (OEM) and suppliers have become increasing important. Since neural networks are extensively used in the design of intelligent components, managing collaborative engineering may be challenging. The components realized by the neural networks may be handled just as black boxes as indicated hereinabove. Further, the neural networks may not be semantically interpretable. Furthermore, determination of whether a neural network can be adjusted or has been adjusted becomes unclear in the collaborative engineering environment.

Existing solutions use neural networks atomically without sharing their development over several collaborating partners. Other existing solutions may provide hybrid visual and textual development environment for machine learning methodologies for end-to-end support during creation of neural network models. The solutions may include creation of training pipelines, and execution of the pipelines. However, none of the existing approaches provide any method for efficient distributed engineering of industrial systems and components that include machine learning components.

Therefore, there exists a need for a configuring method which would guarantee the quality of the neural networks across a collaborative engineering environment. Accordingly, the systems, devices and methods for evaluating neural networks used in industrial applications may benefit from improvements.

The objective of the present invention is to provide effective engineering of industrial systems, particularly in collaborative engineering environments through verifiable configuration of the neural networks used therein.

In an example a method of configuring at least one neural network used in an industrial environment is provided. The industrial environment comprises at least one industrial system with one or more hardware and software components. The method comprising receiving the neural network, wherein the neural network is trained based on at least one trained dataset associated with a system architecture of the industrial system; determining modified-parameters of the neural network based on the training; defining a changeability index for the trained neural network based on comparison of the modified-parameters with predefined-parameters of the neural network; and configuring the neural network based on the changeability index.

In another example a neural network model associated with a system architecture of an industrial system comprising at least one of hardware components and software components is provided. The neural network model comprises a neural network architecture comprising input neurons, hidden layers and output neurons; neural network parameters comprising at least one of weights and biases used by the input neurons, hidden layers and/or output neurons; restriction matrix comprising a matrix of at least one of permissions and restrictions to further modify the neural network parameters; wherein the permissions and restrictions are based on the system architecture comprising at least one of critical features of the industrial system and connectivity of the hardware and software components.

In yet another example, an architecture modelling environment for configuring at least one neural network used in an industrial environment is provided. The architecture modelling environment comprises an IDE configured to enable collaborative configuration of the neural network, wherein the IDE is configured according to at least one of the method steps disclosed herein.

In another example, a computer program product is provided, the computer program product comprising computer readable code, that when executed on a processor, performs any one of the method steps disclosed herein.

In yet another example, a data stream representative of the neural network model is provided.

The above embodiments of the present invention provide an ability in integrated development environments of modelling and design software to articulate engineering of machine learning algorithms, such as neural network algorithms. Particularly, the present invention addresses the need to configure the neural networks considering criticality levels of safety relevant features of the industrial system and the industrial environment. In an embodiment, the present invention also provides a method for managing supply chain collaboration while using neural networks, such that the quality and integrity of the neural networks are maintained.

The present invention provides an additional aspect in addition to the specification of the neural network's design architecture. The neural network architecture may be defined by its layers input neurons, hidden layers, and output neurons with corresponding parameters such as machine learning pipelines computing learned weights and biases. The additional aspect is the introduction of the changeability index to neural network architecture and parameters. The changeability index defines the freedom for each weight and bias of a trained neural network to be modified in further training. The changeability index is based on the system architecture. In an embodiment, the changeability index may be determined with respect to the criticality level of each trained safety relevant feature of the industrial system provided in the system architecture.

In an embodiment of the present invention, the changeability index may be determined based on a restriction matrix. The restriction matrix may be computed dynamically during the training of the neural network by measuring the impact caused by a mini-batch of criticality level labelled training inputs to the neural network. In another embodiment, the neural network and the application in the industrial environment may be used to determine whether several separate restriction matrices can be determined for each corresponding criticality level, or a one restriction matrix can be composed based on ranking rules predefined by an engineer of the neural network.

In an embodiment of the present invention, the restriction matrix may be generated by mapping a criticality level to a training impact ratio. The present invention is advantageous in a supply chain scenario where a supplier may be assigned to design a component containing a neural network. The supplier may not only provide an integrator with the trained ready to go neural network architecture and parameters, but the supplier will also additionally deliver the corresponding restriction matrix (or several matrices). The restriction matrix may be used by an integrator to further train the neural network with the training dataset from her/his normally more general perspective without violating already implemented criticality relevant features. This would allow for a better collaboration management also for components containing machine learning components. The present invention remains advantageous if the scenario is scaled up with several suppliers focusing on different features of an artificially intelligent component whereby safety relevant features remain untampered.

In an embodiment, the restriction matrices may be automatically generated and are used to permit/restrict a further learning which might be required e.g. to classify or detect some additional aspects of the industrial environment model or to further develop an intelligent algorithm under some changed circumstances. Particular neurons and their associated weights may be 'frozen' to different degrees thus restricting a flexibility of certain important parts of a neural network that are considered to be prohibited for further modifications. An integrator (or OEM) can also use this ability to prepare a set of predefined architectural neural network templates implementing a basic set of requirements for a supplier.

As used herein, industrial environment refers to a facility for manufacture, production that may be semi or completely automated. For example, industrial automation environment, laboratory industrial environment, building industrial environment and the like. Further, according to the present invention, industrial environment may include a combination of one or more industrial automation environments, laboratory industrial environments, building industrial environments.

The industrial environment has multiple of data that may be generated within the environment or may be associated with the environment. For example, sensor data may be generated within the industrial environment and the control data may be associated with the environment even if it is not generated within the environment. In another example, sensor data may be synthesized to reflect one or more operating conditions of the industrial environment. The sensor data may be analyzed using neural networks to enable performance of one or more operations autonomously. Such operations may include triggering a control signal to one or more actuators in the industrial environment.

For example, the industrial environment may be an autonomous diving environment that includes multiple sensing and actuating units which are used for navigation. The autonomous driving environment also includes controllers that execute or enable execution of the neural networks that process the sensor data to define the navigation path. It may be necessary for the controllers to recognize and react to an increased number of complex scenarios. The controller may classify information associated with the autonomous driving environment into safety critical information. The classification of information may be performed by the neural networks. Classification of the information as safety critical may trigger autonomous operations by the actuating units. The present invention advantageously ensures the accuracy of the neural networks and thereby ensuring accurate classification is performed irrespective of the entity using the neural networks.

In another example, the industrial environment may be a building automation environment that includes multiple lighting, heating and ventilation units and associated sensing units. The building automation environment may include multiple controllers that adapt the lighting, heating and ventilation based on occupancy of the building. The neural network used by the controllers may enable determination of the occupancy and occupant preferences for the lighting heating and ventilation. Using the present invention, the occupant preference is ensured by restricting modification of the neural networks with regard to the occupant preferences. In healthcare environments, conditions suitable for patient may be ensured by restricting learning of neural networks used for heating, ventilation and air control.

The method may include enabling configuration of the neural network using an Integrated Development Environment (IDE). The IDE may be communicatively coupled to the lifecycle software and/or the manufacturing execution software associated with the industrial system. For example, the IDE may be a generic interface to the lifecycle software and/or the manufacturing execution system software to receive the system architecture. In certain embodiments, operation and maintenance software for condition monitoring of the industrial environment may also be accessed for configuring the neural network. The present invention advantageously provides a single interface such that multiple system software tools can be accessed to determine the system architecture and thereby configure the neural networks.

The method may additionally include generating a system architecture based on the information from the lifecycle software, the MES or the operation-maintenance software or a combination thereof. The lifecycle software provides access to at least one of conception information of the industrial system, design information, realization information, inspection planning information, or any combination thereof. The manufacturing execution software provides access to at least one of production data of the industrial system, inspection execution data, or any combination thereof. The lifecycle software and/or the manufacturing execution software are used to generate the system architecture. Accordingly, the system architecture refers to a representation of the critical features and connectivity of the hardware and software components.

In an embodiment, the combination of the software tools enables integration of processes, events, safety and control of the industrial environment into the system architecture. Accordingly, the system architecture may also include framework of the industrial environment that may be used for installation, operation and maintenance.

In another example, the IDE associated with the lifecycle software is used for configuring the neural network by enabling the ability to restrict and permit reconfiguration of the neural network via the IDE. In operation, the Graphical User Interface (GUI) of the IDE may be used to indicate whether reconfiguration/modification of the neural network is possible. The present invention also advantageously provides an add-on to existing IDE of system software tools whereby the neural network is configured/engineered during the process of engineering the industrial system.

To configure the neural network based on the system architecture, the method may include generating the trained dataset using the system architecture. In an embodiment, the trained dataset is generated by labelling datapoints in one or more datasets based on the system architecture. The system architecture includes critical features and connectivity of hardware and software components of the industrial system. For example, the system architecture may include aspects of the ANSI/ISA-18.2, Management of Alarm Systems for the Process Industries in the industrial system. The trained dataset includes datapoints that are annotated to refer to the alarm triggers.

The method may further include training the neural network based on the trained dataset and predefined-parameters. The predefined-parameters may be assumptions or preferred parameters for the neural network. The parameters of the neural network include number of input/output neurons, number of hidden layers, weights and biases.

The method may also include training the neural network with a batch of the critical features of the industrial system. Accordingly, the effort to train the neural network may be reduced. In addition, the impact of the critical features on the predefined-parameters can be assessed.

The method may include determining the modified-parameters from the trained neural network based on the modifications to the predefined-parameters. Further, the method may include measuring a training impact ratio of the modified-parameters in relation to the predefined-parameters. Furthermore, the method may include mapping the training impact ratio to critical features in the system architecture using the trained dataset.

The present invention advantageously analyses the training of the neural network. In an embodiment, the analysis may be performed by monitoring learning rate of the neural network, changes in weights and biases at one or more neurons of the neural network for each iteration. In an embodiment, the modified-parameters are the resultant weights and biases after the training of the neural network is complete. The modifications are then tracked to the datapoints in the trained dataset. Datapoints linked to the critical features are identified and associated weights and biases are identified as critical-parameters of the neural network.

The technical effect of the determination of the critical-parameters of the neural network is the ability to determine what neural network parameters can be modified and what neural network parameters should not be modified. By tracking and controlling the modification of the critical-parameters, operation of the neural network becomes trackable and the results from the component employing the neural network becomes reliable. For example, a regulatory authority for air quality may be able to generate neural network templates by identifying critical-parameters that should not be modified. The neural network templates may be used by automobile manufactures in an air quality controller to ensure that the air quality of the automobile meets the regulatory requirements. Further, the regulatory authority may track the critical-parameter to verify whether an automobile using the air quality controller is in conformance with the restrictions imposed.

In an embodiment, the critical-parameters may be represented in a restriction matrix. The method may include computing one or more restriction matrix comprising ranking rules based on the mapping of the training impact ratio to the trained dataset. In an embodiment, the restriction matrix comprises a matrix of permissions and restrictions to further modify the critical-parameters of the neural network. The restriction matrix may include the critical-parameters in addition to the ranking rules.

The method may further include determining a changeability index for the modified-parameters of the neural network based on the restriction matrix. The changeability index comprises a threshold within which the modified-parameters have a freedom to change. The freedom to change the parameters of the neural network may be indicated using alerts generated via a GUI to enable configuration of the neural networks.

The method includes configuring the neural network based on the changeability index. Configuring the neural network at may include restricting modification of the neural network based on the restriction matrix. In an embodiment, restriction of the modification may be performed by freezing one or more neurons and associated weights of the neural network to a customizable degree based on the restriction matrix. Further, the restriction is communicated by displaying an alert via the GUI indicating the restrictions on the one or more neurons and the associated weights.

The method may include validating operation of the neural network based on conformance with the restriction matrix. Validating operation of the neural network comprises validating designing of the neural network based on the restriction matrix. The validation operation may be extended to train a second neural network. The method may include training a second neural network based on the restriction matrix, the trained dataset and the predefined-parameters.

In an embodiment, multiple restriction matrices may be generated for different iterations of the neural network. For tracking and validation, the restriction matrices are stored. Accordingly, the method may include storing the restriction matrix, and the associated weights and biases in an encrypted binary format with a digital watermark.

The method may include orchestrating collaborative configuration of the neural network in the industrial environment based on conformance to the changeability index. As indicated herein above, the industrial environments that include one or more entities are capable of configuring the neural networks in a safe and systematic manner. The entities may include manufacturers, suppliers and/or developers of the industrial system.

The present invention is further described hereinafter with reference to illustrated embodiments shown in the accompanying drawings, in which:
- FIG 1: illustrates a schematic representation of an architecture modelling environment for configuring neural networks associated with an industrial environment, according to an embodiment of the present invention;
- FIG 2: illustrates a block diagram of a system for configuring neural networks associated with an industrial environment, according to an embodiment of the present invention;
- FIG 3: illustrates a Graphical User Interface (GUI) for configuring neural networks associated with an autonomous driving system, according to an embodiment of the present invention;
- FIG 4: illustrates a Graphical User Interface (GUI) for configuring neural networks associated with an industrial environment, according to an embodiment of the present invention; and
- FIG 5: illustrates flow diagrams indicating method steps of methods for configuring one or more neural networks associated with an industrial environment, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

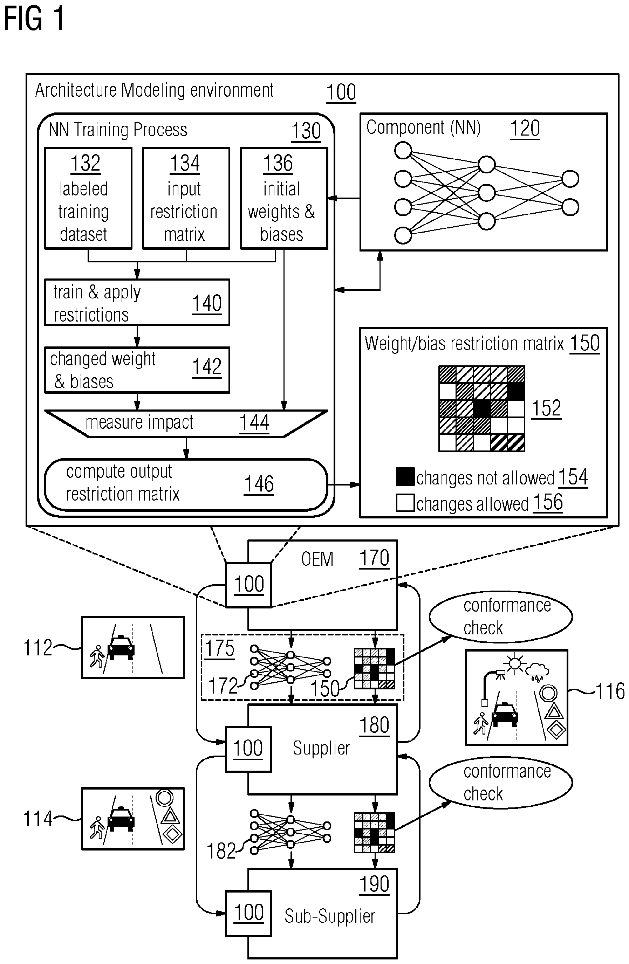

FIG 1 illustrates a schematic representation of an architecture modelling environment 100 for configuring neural networks associated with an industrial environment, according to an embodiment of the present invention. The industrial environment in Fig. 1 is illustrated by numerals 112-116. As shown, the industrial environment includes an autonomous driving system and its surrounding environment.

As shown in Fig. 1 the industrial environment relates to the driving environment and the operation of an autonomous driving system. The industrial environment may also be a manufacturing plant with multiple robotic units or a laboratory automation environment. The example of the autonomous driving system is not to be construed as a limiting example of the present invention.

The architecture modelling environment 100 is illustrated as a common interface across multiple entities involved in the industrial environment, particularly development of the industrial system (i.e. autonomous driving system). In the present example, the multiple entities include an Original Equipment Manufacturer (OEM) 170, a supplier 180 and a sub-supplier 190. There can be further entities such as a consumer, a regulatory body and an end user who can also participate in the configuration of the neural networks based on the industrial application.

For example, a neural network may be used for monitoring carbon emission from a manufacturing plant. The regulatory authority for ensuring carbon emissions may be an entity that defines how the neural network needs to be configured. In another example, the end user may be an entity that determines how a neural network used for designing and manufacturing apparel is to be configured.

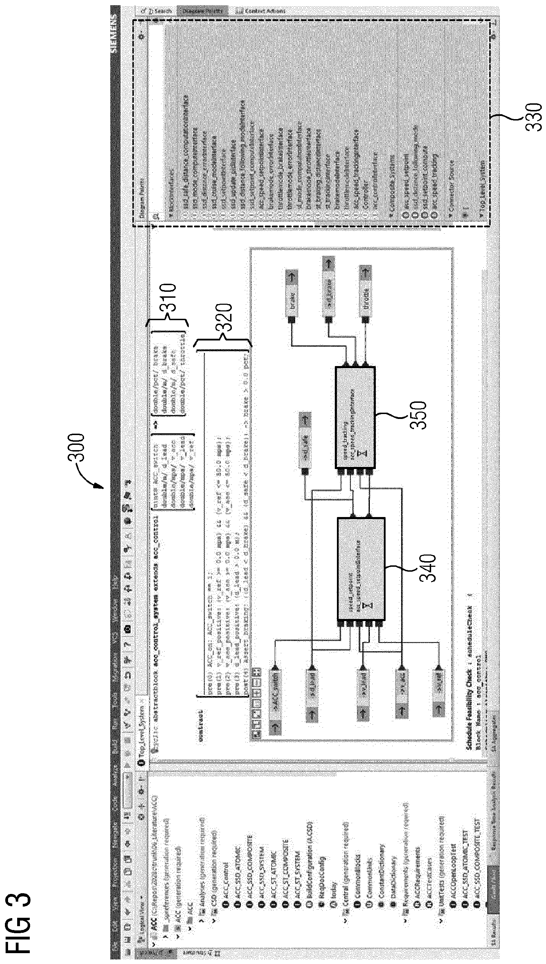

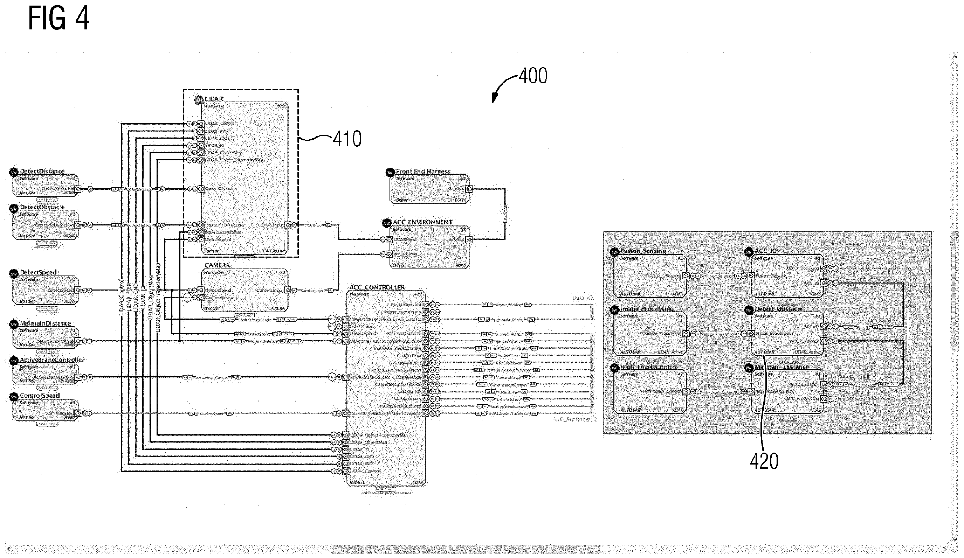

The architecture modelling environment 100 may be implemented using a Graphical User Interface (GUI). The GUI may be hosted on a computing environment and accessible to the entities 170-190 on a website. In another embodiment, the GUI may be installed locally at each entity 170-190. In yet another embodiment, multiple GUIs and underlying software applications may be used by the entities 170-190 to configure the neural network. Accordingly, the present invention does not limit implementation of the Architecture Modelling Environment 100 to a single software application or GUI. Multiple software applications and GUIs may be used concurrently or sequentially to implement the present invention. Figs 3 and 4 illustrate examples of GUIs that are used to implement the Architecture Modelling Environment 100.

The Architecture Modelling Environment 100 is used to articulate engineering of neural networks considering criticality levels of safety relevant features in the industrial environment. Further, the Architecture Modelling Environment 100 is managed across the supply chain collaboration processes. The operation of the Architecture Modelling Environment 100 is described herein below.

The Architecture Modelling Environment 100 may be communicatively coupled to one or more system architecture tools that are used to generate a system architecture for one or more industrial systems in the industrial environment. In the present example, the system architecture tool may be used to design an autonomous driving system. The inputs to the Architecture Modelling Environment 100 include a trained dataset 132 and a predefined neural network 120. The trained dataset 132 is associated with the system architecture. The trained dataset 132 may be trained in batches by annotating/labelling datapoints associated with critical features of the autonomous driving system. For example, the datapoints may be labelled as Automotive Safety Integrity Level (ASIL)-A, ASIL-B/C, ASIL-D. As used herein ASIL is a risk classification system defined by the ISO standard 26262 for safety of driving systems on roads.

The neural network 120 is associated with one or more components of the autonomous driving system. The neural network 120 may include predefined design architecture with input neurons, hidden layers, and output neurons. The component associated with the neural network 120 may be a hardware component such as a proximity sensor or a software component such as image recognition module. The neural network 120 may have predefined weights and biases 136. The weights and biases 136 and the predefined design architecture may also be referred to as predefined-parameters of the neural network.

In addition to the trained dataset 132, the Architecture Modelling Environment 100 may receive an input restriction matrix 134. For the purpose of explanation, the input restriction matrix 134 has no restrictions indicated. However, a person skilled in the art will appreciate that in a supply chain scenario disclosed herein the input restriction matrix 134 may be provided with restrictions from the OEM 170.

Further inputs to the Architecture Modelling Environment 100 may include criticality ranking rules to map a criticality level to a training impact ratio. Such mapping may be particularly relevant in case of a composed restriction matrix. As used herein "composed restriction matrix" refers to a single restriction matrix, derived from several individual matrices that address labelled features of e.g. different risk classification levels such as ASIL-A, ASIL-B/C, ASIL-D using provided criticality ranking rules. Also, dependent on a collaboration scenario, different kinds of restriction matrices with different severity levels might be required. The composed restriction matrix allows to aggregate certain required labelled features to be constrained in a specific collaboration scenario.

Furthermore, an environment model for labelling critical features in the training dataset 132 may be provided as input. The Architecture Modelling Environment 100 can therefore be equipped to generate the trained dataset 132.

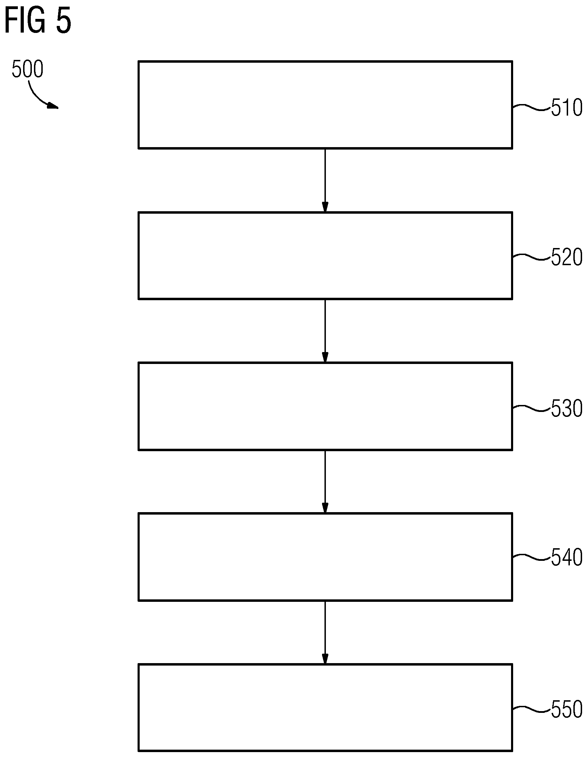

The inputs described hereinabove are used to train the neural network 120 and apply restrictions at step 140. The difference in the predefined-parameters are observed at step 142 to determine modified-parameters of the neural network 120. At step 144, the impact of the change in parameters is determined by determining the training impact ratio. At step 146, an output restriction matrix 150 is generated based on the training impact ratio. The restriction matrix 150 may be indicated using the matrix 152 and may include indication of the parameters of the neural network 120 that may not be further modified 154 or further modified 156 or partially modified (indicated by different shades of grey). The freedom to modify the parameters of the neural network 120 or the neural network 172 or the neural network 182 is referred to as the changeability index. The method steps are described in detail in Fig. 5.

In Fig. 1, columns in the restriction matrix 150 represent the neural network 172 with 5 neurons of the hidden and the output layers and the input layer having no biases. The first row represents the biases of these neurons, whereas all other rows represent the weights for connected neurons from a predecessor layer. The output neurons are connected only to the three neurons of the hidden layer. Through the hatched lines or shades of grey, the restriction matrix advantageously illustrates which parameters of the neural network is restricted and to what extent.

As a result of the steps performed hereinabove, the Architecture Modelling Environment 100 is configured to enable generation of an intelligent component containing a trained neural network that can be tracked across supply chain collaboration processes.

Fig. 1 illustrates a supply chain scenario involving OEM 170, Supplier 180, and Sub-supplier 190 into a collaboration process to jointly develop and configure a neural network for image recognition module of an autonomous driving system. The OEM 170 specifies requirements for the image recognition module and defines the basic architecture of the neural network 172. The neural network 172 is trained to cover the basic functionality, namely, to be able to recognize traffic lanes and moving objects such as another cars or pedestrians. OEM 170 may then transfer further development of the image recognition module including the neural network 172 and the restriction matrix 150 over to the Supplier 180.

The combination of the neural network 172 and the restriction matrix 150 is referred to as a neural network model 175. The neural network model 175 is associated with the system architecture of the autonomous driving system. The neural network 172 includes a neural network architecture comprising input neurons, hidden layers and output neurons. Further, the neural network 172 has network parameters defined by weights and biases that are used at the input/output neurons or at the hidden layers. The neural network model 175 may be transmitted to the Supplier 180 as a data stream representative of the neural network 172 and the restriction matrix 150.

The Supplier 180 may additionally implement recognition of traffic signalling. The Supplier's architecture modelling environment 100' also considers the functionality of the neural network 172 and prevents violation of already implemented features based on the restriction matrix 150.

To be able to meet the requirements of the OEM 170, the Supplier 180 may decide to improve the reliability of the image recognition module under different environmental weather/light conditions and involves the Sub-supplier 190 for further development. The Supplier 180 transfers the image recognition module including the supplier-trained neural network 182 and the restriction matrix 150 over to the Sub-Supplier 190. In an embodiment, the Supplier 180 may generate a subsequent restriction matrix to further restrict modifications to the neural network 182. After finishing implementation, the Sub-supplier 190 delivers the final version of the neural network to the Supplier 180 who can verify the delivered package and automatically check the conformance to Supplier's restriction matrix and the restriction matrix 150.

In the present invention, an automatic conformance check is possible since weights and biases of the neural network 182 and delivered neural network can directly be compared. The resulting difference can be checked with the restriction matrix 150. In case of successful conformance check Supplier 180 finally delivers the image recognition module to OEM 170, who can also do the same automatic conformance check but this time using the OEM's restriction matrix 150.

The automatic conformance check advantageously ensures quality of the machine learning algorithms used in an industrial environment. To perform the conformance check, the present invention provides the restriction matrix that not only ensures conformance with preferred restrictions, the restriction matrix also validates such conformance.

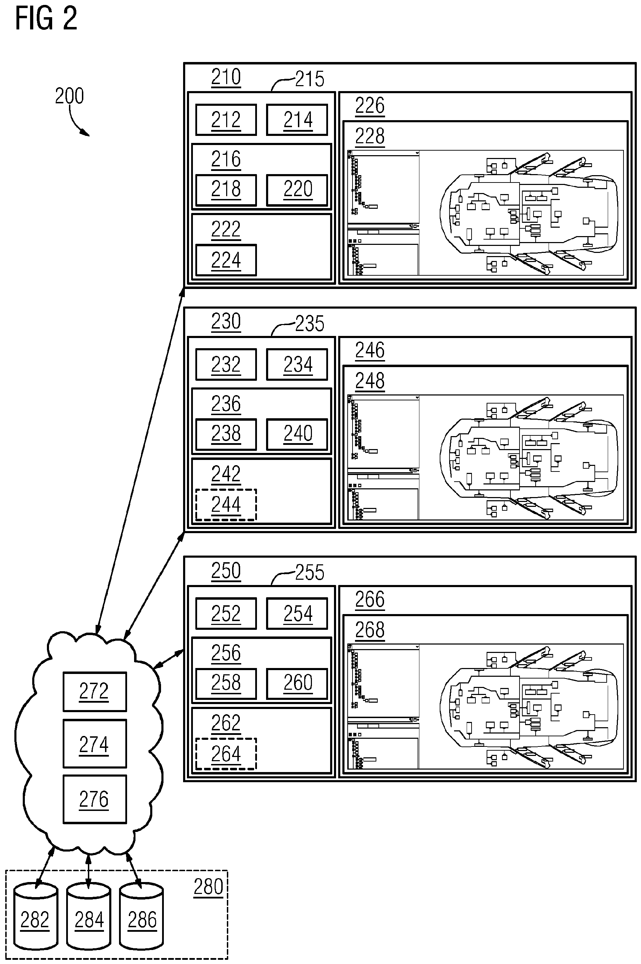

FIG 2 illustrates a block diagram of a system 200 for configuring neural networks associated with the supply chain embodiment in Fig. 1, according to an embodiment of the present invention.

The OEM 170 is represented using an OEM computing unit 210 comprising a firmware module 215 including a training module 212, an Integrated Development Environment (IDE) module 214, a restriction module 216 and a configuration module 222. The restriction module 216 further includes a training impact module 218 and a changeability module 220. The configuration module 222 includes an orchestration module 224. The OEM unit 210 may further include a display unit 226 including a Graphical User Interface (GUI) 228.

The Supplier 180 is represented using a supplier computing unit 230 comprising a firmware module 235 including a training module 232, an Integrated Development Environment (IDE) module 234, a restriction module 236 and a configuration module 242. The restriction module 236 further includes a training impact module 238 and a changeability module 240. The configuration module 242 includes an orchestration module 244. The supplier unit 230 may further include a display unit 246 including a Graphical User Interface (GUI) 248.

The Sub-supplier 190 is represented by a sub-supplier computing unit 250 comprising a firmware module 255 including a training module 252, an Integrated Development Environment (IDE) module 254, a restriction module 256 and a configuration module 262. The restriction module 256 further includes a training impact module 258 and a changeability module 260. The configuration module 262 includes an orchestration module 264. The sub-supplier unit 250 may further include a display unit 266 including a Graphical User Interface (GUI) 268.

The system 200 further includes a computing platform 270 hosted on a cloud server. The computing platform 270 may also be referred as cloud computing platform 270. As used herein, "cloud computing" refers to a processing environment comprising configurable computing physical and logical resources, for example, networks, servers, storage, applications, services, etc., and data distributed over the network, for example, the internet. The cloud computing system provides on-demand network access to a shared pool of the configurable computing physical and logical resources. The network is, for example, a wired network, a wireless network, a communication network, or a network formed from any combination of these networks.

The computing platform 270 is communicatively coupled to one or more databases 280. The databases 280 may include a lifecycle database 282, a Manufacturing Execution System (MES) database 284 and an operation-maintenance database 286. The lifecycle database 282 includes conception information, design information, realization information, inspection planning information, or any combination. The MES database 284 includes production data, device validation data, inspection execution data, or any combination thereof. The operation-maintenance database 286 includes operation data associated with operation of the devices and/or the technical system, non-conformance information, service information of the devices, or any combination thereof.

The computing platform 270 is configured to host one or more applications such as an Architecture Modelling Environment 272 and a System Architecture Suite 274. Further, the computing platform 270 is configured to store trained dataset in a train datastore 276 that may be accessed by the OEM unit 210, the supplier unit 230 and the sub-supplier unit 250.

The Architecture Modelling Environment (AEM) 272 may be locally downloaded at the OEM unit 210, the supplier unit 230 or the sub-supplier unit 250. In the present embodiment, the IDE modules 214, 234 and 254 are used to enable access to the AEM 272. The AEM 272 is accessed by the units 210, 230 and 250 via the GUIs 228, 248 and 268. Further, the functionality performed by the modules in the firmware modules 215, 235 and 255 disclosed hereinafter are also performed by the AEM 272. Accordingly, the system 200 is configured to perform the steps of the invention without the requirement of locally hosting the modules 216, 236, 256, 222, 242 and 262.

The System Architecture Suite 274 includes one or more software tools that are used to generate system architecture for the autonomous driving system in Fig. 1. The software tools include a lifecycle software that enables design and planning of the autonomous vehicle. Further software tools include a Manufacturing Execution Software (MES) that provides insights into manufacturing and execution of the autonomous driving vehicle. In an embodiment, the software tools may also include operation-maintenance software that are able to provide access to information regarding maintenance and operating conditions of the autonomous driving system, during it use. The System Architecture Suite 274 is configured to provide comprehensive insight into the design and operation of the autonomous driving system.

Accordingly, the system architecture includes critical features and connectivity of hardware and software components of the autonomous driving system. The system architecture is generated using the information in the databases 280. In an embodiment, the System Architecture Suite 274 is configured to receive information from the databases 280 to generate the system architecture.

In another embodiment, the System Architecture Suite 274 is configured to generate the trained dataset. The System Architecture Suite 274 generates the trained dataset by labelling one or more training datasets with annotations indicating the critical features and connectivity of the hardware and software components based on the system architecture. As used herein the training datasets refers to historical operation data or predicted operation data or a combination of both. The training datasets are used to train the neural network used in the automation driving system. The training datasets are stored in the train datastore 276. As disclosed herein, the training datasets are trained further by annotating the datapoints indicating the critical features. For example, the datapoints associated with ASIL A and ASIL B are annotated.

In yet another embodiment, the trained dataset is generated at the OEM unit 210, the supplier unit 230 or the sub-supplier unit 250. The training modules 212, 232 and 252 are configured to receive the training datasets from the train datastore 276. Further, the training modules 212, 232 and 252 are configured to receive the system architecture from the System Architecture Suite 274. The trained dataset is generated by labelling datapoints associated with the critical features in the system architecture.

The restriction modules 216, 236 and 256 are configured to generate the restriction matrix at each stage of the supply-chain. For example, the restriction module 214 generates the restriction matrix that is shared by the OEM 170 to the Supplier 180. Similar action may be performed by the Supplier 180. In an embodiment, the Sub-supplier 190 may use independent contractors and therefore may require a restriction matrix to validate the neural network generated by the independent contractors.

To generate the restriction matrices, the restriction modules 216, 236 and 256 include training impact module (i.e. impact module) 218, 238 and 258. The impact modules 218, 238 and 258 are configured to measure training impact ratio of the modified-parameters in relation to the predefined-parameters of the neural network. As used herein, the predefined-parameters include neural network parameters such as weights and biases, with which the neural network is initialized. In an embodiment, the predefined-parameters may be generated based on the training dataset and further modified based on the trained dataset. In another embodiment, the predefined-parameters may be determined based on requirements of a user of the autonomous driving system. In yet another embodiment, the pre-defined parameters may be based on assumed performance of the autonomous driving system. As used herein, the parameters generated after the training of the neural network is referred to as the modified-parameters.

The impact modules 218, 238 and 258 are further configured to map the training impact ratio to the critical features in the system architecture using the trained dataset. The mapping of the training impact ratio to the critical features enables a determination of rules that define how the neural network is to be further trained. These rules are referred to as the ranking rules. They are predefined for the Supplier 180 by the OEM 170. Further, the mapping enables determination of critical-parameters. As used herein, critical-parameters refer to the weights, biases and other neural network parameters that are associated with the critical features in the system architecture.

The restriction modules 216, 236 and 256 are configured to compute the restriction matrix comprising the ranking rules. In an embodiment, the restriction matrix comprises the critical-parameter and the ranking rules with the functionality of restricting further modification or training of the neural network. In another embodiment, the restriction matrix comprises a matrix of at least one of permissions and restrictions to further modify the critical-parameter from the modified-parameters. A person skilled in the art will appreciate that the restriction matrix does not necessarily need to be represented in a matrix form as long as it is able to perform the functionality of restricting further modification of the neural network. In an embodiment, the restriction matrices at each stage of the supply chain process are stored in the computing platform 270. In an embodiment, the restriction matrices and associated weights, biases, input node, hidden layers and output nodes are stored in an encrypted binary format with a digital watermark.

The restriction modules 216, 236 and 256 also include changeability index modules 220, 240 and 260. The changeability index modules 220, 240 and 260 are configured to define a changeability index for the neural network based on comparison of the modified-parameters with predefined-parameters of the neural network. The changeability index modules 220, 240 and 260 are configured to determine the changeability index for the modified-parameters of the neural network based on the restriction matrix. As used herein, the changeability index comprises a threshold within which the modified-parameters have a freedom to change. The freedom to change may be represented visually in the restriction matrix as indicated in the restriction matrix 152 in Fig. 1.

The configuration modules 222, 242 and 262 are configured to restrict modification to the neural network. The restriction is performed by freezing one or more neurons and associated weights of the neural network to a customizable degree based on the restriction matrix. In an embodiment, the configuration modules 222, 242 and 262 are further configured to validate operation of the neural network based on conformance with the restriction matrix. The operation of the neural network is validated by confirming whether designing of the neural network conforms with the restriction matrix. In another embodiment, the configuration modules 222, 242 and 262 are configured to train a second neural network based on the restriction matrix, the trained dataset and the predefined-parameters.

The configuration modules 222, 242 and 262 further include the orchestration modules 224, 244 and 264. The orchestration modules 224, 244 and 264 are configured to orchestrate collaborative configuration of the neural network based on conformance to at least one of the restriction matrix or the changeability index. In an embodiment, the orchestration module 224 is invoked by the supplier unit 230 and the sub-supplier unit 250 whereby the orchestration is carried out with the supervision of the OEM 170.

FIG 3 illustrates a GUI 300 for configuring the neural network associated with the autonomous driving system in Fig. 1. The GUI 300 is used to represent the Architecture Modelling Environment 272.

The GUI 300 is used to define operations on inputs 310 to the autonomous driving system to generate output conditions 315. Further, the GUI 300 includes rules 320 to perform automated checks on the operations performed. The operations that are performed can be selected from a functional box 330 that illustrates a section of the operations supported by the GUI 300.

In Fig. 3, neural networks are used to perform operations of speed setpoint determination and speed tracking. Accordingly, the functional block of speed_setpoint 340 includes a speed determination neural network and associated restriction matrix defined by the OEM 170. Similarly, the functional block of speed_tracking 350 includes a speed tracking neural network and associated restriction matrix. In an embodiment, the speed_tracking function block 350 may include the same restricted matrix of the speed_setpoint 340. In another embodiment, the restriction matrix for speed_tracking 350 may be null when provided by the OEM 170 and modified with restrictions by the Supplier 180.

A person skilled in the art will appreciate that the GUI 300 would enable similar operations for different industrial systems. For example, in an industrial plant with robotic units, the GUI can be used to configure neural networks associated with operation of the robotic units and the industrial plant. FIG 4 illustrates a GUI 400 for configuring neural networks associated with an industrial environment, according to an embodiment of the present invention. The GUI 400 illustrates a section of a smart manufacturing industrial environment including robotic units. The robotic units include hardware components Light Detection and Ranging (LIDAR) sensors, camera and a controller. The controller generates control signals based on functional modules of the robotic units. The functional modules are software components such as distance detection module, obstacle detection module, speed detection module, distance maintenance module, brake activation module and speed control module. The hardware components and the software components interact for the robotic unit to operate.

The GUI 400 illustrates a LIDAR functional block 410 including a LIDAR neural network that is configured to fuse one or more LIDAR sensor outputs and a LIDAR restriction matrix that defines how the LIDAR neural network can or cannot be modified. Further, the GUI 400 illustrates the Obstacle Detection functional block 420. The Obstacle detection 420 includes an object recognition neural network and the object restriction matrix.

In an embodiment, an external developer develops an obstacle detection neural network in addition to the obstacle recognition neural network used in block 420. In such a scenario, the external developer may modify the functional block 420 by training the object recognition neural network to classify an object as an obstacle. The GUI 400 will not permit modifications to the block 420 if the modifications result in non-conformance with the object restriction matrix.

The GUI 400 represents an Architecture Modelling Environment for configuring the LIDAR neural network and the Obstacle detection neural network for robotic units in a smart manufacturing environment. A person skilled in the art appreciates that the Architecture Modelling Environment is an Integrated Development Environment that is used by one or more entities to configure the LIDAR neural network and the Obstacle detection neural network.

FIG 5 illustrates flow diagram 500 indicating method steps of methods for configuring one or more neural networks associated with an industrial environment, according to an embodiment of the present invention.

The method 500 begins at step 510 by receiving trained neural network trained based on a trained dataset associated with a system architecture of the industrial system. In an embodiment, the step 510 may include training the neural network based on the trained dataset and predefined-parameters. The predefined-parameters may be assumptions or preferred parameters for the neural network. The parameters of the neural network include number of input/output neurons, number of hidden layers, weights and biases.

In another embodiment, the method step 510 may include generating the trained dataset. The trained dataset is generated by labelling datapoints in one or more datasets based on the system architecture. The system architecture includes critical features and connectivity of hardware and software components of the industrial system. For example, the system architecture may include aspects of the IEC 61499 standard for distributed control and automation based on event triggers in the industrial system. The trained dataset includes datapoints that are annotated to refer to the event triggers.

The system architecture may be generated using one or more software tools associated with the industrial system. The software tools include lifecycle software, manufacturing execution system software and in some embodiments operation and maintenance software. The lifecycle software provides access to at least one of conception information of the industrial system, design information, realization information, inspection planning information, or any combination thereof. The manufacturing execution software provides access to at least one of production data of the industrial system, inspection execution data, or any combination thereof. The lifecycle software and/or the manufacturing execution software are used to generate the system architecture. Accordingly, the system architecture refers to a representation of the critical features and connectivity of the hardware and software components.

In yet another embodiment, the method step 510 may include enabling configuration of the neural network using an Integrated Development Environment (IDE). The IDE may be communicatively coupled to the lifecycle software and/or the manufacturing execution software associated with the industrial system. For example, at step 510 the IDE is used as an interface to the lifecycle software and/or the manufacturing execution system software to receive the system architecture. In another example, the IDE associated with the lifecycle software is used for configuring the neural network by enabling performance of at least one of steps 520-550 via the IDE.

Step 520 includes determining the modified-parameters from the trained neural network based on the modifications to the predefined-parameters. Further, step 520 includes measuring a training impact ratio of the modified-parameters in relation to the predefined-parameters. Furthermore, the step 520 includes mapping the training impact ratio to critical features in the system architecture using the trained dataset.

At step 520 the training of the neural network is analysed. In an embodiment, the analysis may be performed by monitoring learning rate of the neural network, changes in weights and biases at one or more neurons of the neural network for each iteration. In an embodiment, the modified-parameters are the resultant weights and biases after the training of the neural network is complete. The modifications are then tracked to the datapoints in the trained dataset. Datapoints linked to the critical features are identified and associated weights and biases are identified as critical-parameters of the neural network.

Step 530 includes computing one or more restriction matrix comprising ranking rules based on the mapping of the training impact ratio to the trained dataset. In an embodiment, the restriction matrix comprises a matrix of permissions and restrictions to further modify the critical-parameters of the neural network. The restriction matrix may include the critical-parameters in addition to the ranking rules.

Step 530 may further include determining a changeability index for the modified-parameters of the neural network based on the restriction matrix. The changeability index comprises a threshold within which the modified-parameters have a freedom to change. The freedom to change the parameters of the neural network may be indicated using alerts generated via a Graphical User Interface to enable configuration of the neural networks.

Step 540 includes configuring the neural network based on the changeability index. Configuring the neural network at step 540 includes restricting modification of the neural network based on the restriction matrix. In an embodiment, restriction of the modification may be performed by freezing one or more neurons and associated weights of the neural network to a customizable degree based on the restriction matrix. Further, the restriction is communicated by displaying an alert via a Graphical User Interface (GUI) indicating the restrictions on the one or more neurons and the associated weights.

Step 540 further includes validating operation of the neural network based on conformance with the restriction matrix. Validating operation of the neural network comprises validating designing of the neural network based on the restriction matrix. The validation operation may be extended to train a second neural network. In an embodiment, the step 540 also includes training a second neural network based on the restriction matrix, the trained dataset and the predefined-parameters.

In an embodiment, multiple restriction matrices may be generated for different iterations of the neural network. For tracking and validation, the restriction matrices are stored. Accordingly, the step 540 includes storing the restriction matrix, and the associated weights and biases in an encrypted binary format with a digital watermark.

Step 550 includes orchestrating collaborative configuration of the neural network in the industrial environment based on conformance to the changeability index. At step 550, the industrial environments that include one or more entities are capable of configuring the neural networks in a safe and systematic manner. The entities may include manufacturers, suppliers and/or developers of the industrial system.

The present invention is directed to multiple industrial environments where neural networks may be used as black box algorithms without the inner logic being exposed. Further, the present invention is also directed to supply chain collaboration and addresses the challenges of neural network integrity with multiple collaborators.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be applied to system/apparatus claims.

## Claims

1. A method of configuring at least one neural network (120) used in an industrial environment, wherein the industrial environment (112, 114, 116) comprises at least one industrial system with one or more hardware and software components, the method comprising:
receiving the neural network, wherein the neural network (120) is trained based on at least one trained dataset associated with a system architecture of the industrial system;
determining modified-parameters of the neural network (120) based on the training;
defining a changeability index for the trained neural network (172) based on comparison of the modified-parameters with predefined-parameters of the neural network (120); and
configuring the neural network (120, 172) based on the changeability index.

2. The method according to claim 1, further comprising:
orchestrating collaborative configuration of the neural network (120) in the industrial environment based on conformance to the changeability index, wherein the industrial environment comprises one or more entities (170, 180, 190) capable of using the neural network (120), wherein the entities comprise at least one of manufacturers (170), suppliers(180, 190) and developers of the industrial system.

3. The method according to claim 1, wherein determining modified-parameters of the neural network (120) based on the training comprises:
training the neural network (120) based on the trained dataset and the predefined-parameters;
determining the modified-parameters from the neural network (120) based on the modifications to the predefined-parameters; and
measuring a training impact ratio of the modified-parameters in relation to the predefined-parameters.

4. The method according to one of the preceding claims and particularly claim 1, wherein defining a changeability index for the neural network (172) based on comparison of the modified-parameters with the predefined-parameters of the neural network (120) comprises:
mapping the training impact ratio to critical features in the system architecture using the trained dataset;
computing at least one restriction matrix (150) comprising ranking rules based on the mapping, wherein the restriction matrix comprises a matrix (152) of at least one of permissions (156) and restrictions (154) to further modify at least one critical-parameter from the modified-parameters; and
determining the changeability index for the modified-parameters of the trained neural network (172) based on the restriction matrix, wherein the changeability index comprises a threshold within which the modified-parameters have a freedom to change.

5. The method according to claim 4, wherein the restriction matrix comprises the critical-parameter and the ranking rules, wherein the critical-parameter comprises at least one of weights and biases of at least one critical feature in the system architecture.

6. The method according to one of the preceding claims comprising:
storing the restriction matrix, and the associated weights and biases in an encrypted binary format with a digital watermark.

7. The method according to one of the preceding claims wherein, configuring the neural network (120) based on the changeability index comprises:
restricting modification of the neural network (120) based on the restriction matrix (150); and
validating operation of the neural network (120, 172, 182) in the industrial system based on conformance with the restriction matrix, wherein validating operation of the neural network (182) comprises validating designing of the neural network (182) based on conformance with the restriction matrix.

8. The method according to claim 7, wherein restricting modification of the neural network (120) based on the restriction matrix comprises:
freezing one or more neurons and associated weights of the neural network (172) to a customizable degree based on the restriction matrix (150);
displaying an alert via a Graphical User Interface (GUI) (300, 400) indicating the restrictions on the one or more neurons and the associated weights.

9. The method according to one of the preceding claims, further comprising:
training a second neural network (182) based on the restriction matrix, the trained dataset and the predefined-parameters.

10. The method according to claim 1, further comprising:
enabling configuration of the neural network (120) using an Integrated Development Environment (IDE) (100) communicatively coupled to at least one of a lifecycle software and a manufacturing execution software associated with the industrial system,
wherein the lifecycle software provides access to at least one of conception information of the industrial system, design information, realization information, inspection planning information, or any combination thereof,
wherein the manufacturing execution software provides access to at least one of production data of the industrial system, inspection execution data, or any combination thereof,
wherein at least one of the lifecycle software, the manufacturing execution software is used to generate the system architecture and wherein the system architecture comprises at least one of the critical features and connectivity of the hardware and software components.

11. The method according to one of the preceding claims, further comprising:
generating the trained dataset by labelling one or more training datasets with annotations indicating the critical features and connectivity of the hardware and software components based on the system architecture.

12. A neural network model (175) associated with a system architecture of an industrial system comprising at least one of hardware components and software components, the neural network model comprising:
a neural network architecture (172) comprising input neurons, hidden layers and output neurons;
neural network parameters comprising at least one of weights and biases used by the input neurons, hidden layers and/or output neurons;
restriction matrix (150) comprising a matrix of at least one of permissions and restrictions to further modify the neural network (120) parameters; wherein the permissions and restrictions are based on the system architecture comprising at least one of critical features of the industrial system and connectivity of the hardware and software components.

13. The neural network model (175) according to claim 12, wherein the restriction matrix comprises at least one critical-parameter associated with at least one critical feature in the system architecture.

14. An architecture modelling environment (100, 300, 400) for configuring at least one neural network (120) used in an industrial environment, wherein the industrial environment comprises at least one industrial system with one or more hardware and software components, the architecture modelling environment comprising:
an IDE configured to enable collaborative configuration of the neural network (120), wherein the IDE is configured according to at least one of the method steps in claims 1-11.

15. A computer program product, comprising computer readable code, that when executed on a processor, performs any one of the method steps of one or more of the method claims 1 to 11.

16. A data stream representative of a neural network model (175) as claimed in claims 12 and 13.
